# EUROPEAN PATENT APPLICATION

(11) **EP 4 391 105 A1**
(43) Date of publication of application: **26.06.2024**
(21) Application number: 23822800.1
(22) Date of filing: 25.04.2023
(51) Int. Cl.: H01M 4/13, H01M 4/139

(54) **ELECTRODE SHEET, BATTERY CELL, BATTERY, AND ELECTRICAL DEVICE**

(30) Priority: 15.06.2022 CN 202221495779 U
(71) Applicant: Contemporary Amperex Technology Co., Limited, Ningde, Fujian 352100 (CN)
(72) Inventor: ZHANG, Jiaxi, Ningde, Fujian 352100 (CN); GAO, Jie, Ningde, Fujian 352100 (CN); MA, Yunjian, Ningde, Fujian 352100 (CN); YU, Honggang, Ningde, Fujian 352100 (CN)
(74) Representative: Rowlands, Stuart Michael
(86) International application number: PCT/CN2023/090686
(87) International publication number: WO 2023/241229

(57) **Abstract**

An electrode sheet (10), a battery cell (101), a battery (100), and an electric device. The electrode sheet (10) comprises a current collector (11) and a tab (12). The current collector (11) comprises a coating region (110) coated with an active material layer (11a) and an empty foil region (111) not coated with the active material layer (11a). The empty foil region (111) does not extend beyond the coating region (110) in a width direction of the current collector (11). The tab (12) is connected to the empty foil region (111).

## Description

### CROSS-REFERENCE TO RELATED APPLICATIONS

This application claims priority to Chinese Patent Application No. 202221495779.5, filed on June 15, 2022 and entitled "ELECTRODE PLATE, BATTERY CELL, BATTERY, AND ELECTRIC DEVICE", the entire contents of which are incorporated herein by reference.

### TECHNICAL FIELD

This application relates to the field of battery technologies, and specifically to an electrode plate, a battery cell, a battery, and an electric device.

### BACKGROUND

Energy conservation and emission reduction are crucial to the sustainable development of the automobile industry. Electric vehicles, with their advantages in energy conservation and environmental protection, have become an important part in the sustainable development of the automobile industry. For electric vehicles, battery technologies are an important factor in connection with their development.

Therefore, how energy density of batteries is enhanced is an urgent technical problem to be solved in the development of battery technologies.

### SUMMARY

This application provides an electrode plate, a battery cell, a battery, and an electric device. Technical solutions provided in this application can increase the energy density of batteries.

This application is implemented by the following technical solutions.

According to a first aspect, this application provides an electrode plate. The electrode plate includes: a current collector including a coated region coated with an active substance layer and an uncoated region uncoated with the active substance layer, where in a width direction of the current collector, the uncoated region does not surpass the coated region; and a tab connected to the uncoated region.

According to the electrode plate in the embodiments of this application, in the width direction of the current collector, the uncoated region does not surpass the coated region. Compared with an electrode plate of which an uncoated region is exposed and surpasses a coated region, the electrode plate in the embodiments of this application has a smaller uncoated region and a larger region that can be coated with an active substance, so that the current collector can be coated with a larger amount of active substance, thereby increasing the energy density of the battery.

According to some embodiments of this application, the coated region includes a plurality of first coated sub-regions; the plurality of first coated sub-regions are spaced apart along a length direction of the electrode plate; and the uncoated region is located between the two adjacent first coated sub-regions.

In this solution, the plurality of first coated sub-regions are spaced apart along the length direction of the electrode plate, and the uncoated region uncoated with the active substance layer is reserved between the two adjacent first coated sub-regions, such that the first coated sub-regions and the uncoated region are both regularly distributed on the current collector, thereby reducing the difficulty in applying the active substance layer and reducing the difficulty in connecting the tab and the uncoated region.

According to some embodiments of this application, the size of the first coated sub-region in the width direction of the current collector is equal to width of the current collector.

In this solution, the first coated sub-region extends to two opposite edges of the current collector in the width direction. As compared with an electrode plate of which an uncoated region extends along the entire length direction of the electrode plate and the width of a coated region is less than the width of a current collector, the current collector of the electrode plate in this solution can be coated with a larger amount of active substance, thereby increasing the energy density of the battery.

According to some embodiments of this application, the coated region further includes a second coated sub-region; the two adjacent first coated sub-regions are connected through the second coated sub-region; and the second coated sub-region and the uncoated region are arranged in the width direction of the current collector.

In this solution, with the second coated sub-region provided on a side of the uncoated region in the width direction of the current collector, an amount of the active substance on the current collector is further increased without affecting connection between the uncoated region and the tab, thereby increasing the energy density of the battery.

According to some embodiments of this application, the size of the uncoated region in a length direction of the current collector is W1, satisfying 5 mm≤W1≤50 mm.

In this solution, the size of the uncoated region in the length direction of the current collector is the width W1 of the uncoated region. A larger W1 allows for a larger area of the uncoated region, resulting in a lower difficulty in connecting the uncoated region and the tab. A smaller W1 allows for a larger amount of the active substance, resulting in a higher energy density of the battery. A value range of W1 is limited to balance the difficulty in connecting the uncoated region and the tab and the amount of the active substance of the electrode plate.

According to some embodiments of this application, 10 mm≤W1≤20 mm is satisfied.

In this solution, W1 is further limited to allow for a lower difficulty in connecting the uncoated region and the tab and allow the electrode plate to have a larger amount of the active substance, such that the battery has a higher energy density.

According to some embodiments of this application, the size of the uncoated region in the width direction of the current collector is L, satisfying 10 mm≤L≤200 mm.

In this solution, the size of the uncoated region in the width direction of the current collector is a length L of the uncoated region. A larger L allows for easier connection between the uncoated region and the tab and a larger contact area therebetween, thus achieving a higher current flow capability. A smaller L allows for a larger amount of the active substance, resulting in a higher energy density of the battery. A value range of L is limited to balance the difficulty in connecting the uncoated region and the tab, the current flow capability, and the amount of the active substance of the electrode plate.

According to some embodiments of this application, 20 mm≤L≤30 mm is satisfied.

In this solution, L is further limited to allow for a lower difficulty in connecting the uncoated region and the tab as well as a higher current flow capability (a higher current flow capability allows for better charge and discharge performance), and allow the electrode plate to have a larger amount of active substance, such that the battery has a higher energy density.

According to some embodiments of this application, the tab includes a first sub-tab and a second sub-tab. The first sub-tab and the second sub-tab are respectively connected to two sides of the uncoated region in a thickness direction thereof, and the first sub-tab is connected to the second sub-tab.

In this solution, the first sub-tab and the second sub-tab can gather current in two sides of the uncoated region in the thickness direction thereof, so as to effectively improve the current flow capability of the tab.

According to some embodiments of this application, the first sub-tab and the uncoated region are welded to form a first welded region; and the first sub-tab and the second sub-tab are welded to form a second welded region.

In this solution, the first sub-tab and the second sub-tab are both electrically connected to the uncoated region through welding, making the tab have good current flow capability.

According to some embodiments of this application, an area of the first welded region is S1, and an area of the second welded region is S2, satisfying 0.1≤S1/S2≤1.

In this solution, a range of an area ratio of the first welded region and the second welded region is limited to allow the tab to have good current flow capability on the premise of meeting the processing requirements.

According to some embodiments of this application, 0.2≤S1/S2≤0.8 is satisfied.

In this solution, the range of the ratio of the first welded region and the second welded region is further limited, allowing for a high current flow capability of the tab.

According to some embodiments of this application, the electrode plate further includes an avoidance region configured to avoid the second welded region; and the avoidance region and the uncoated region are arranged in the width direction of the current collector.

In this solution, the provision of the avoidance region facilitates mutual welding between the first sub-tab and the second sub-tab and can reduce the influence of the welding between the first sub-tab and the second sub-tab on the thickness of the electrode plate.

According to some embodiments of this application, the size of the uncoated region in a length direction of the current collector is W1, and the size of the avoidance region in the length direction of the current collector is W2, satisfying 0.6≤W2/W1≤1.5.

In this solution, the size of the avoidance region in the length direction of the current collector is the width W2 of the avoidance region. A larger W2/W1 allows for a larger width of the avoidance region, thus facilitating connection between the tab and the uncoated region. A smaller W2/W1 allows for a smaller width of the avoidance region, thus allowing a larger amount of active substance to be applied. A range of a width ratio of the avoidance region and the uncoated region is limited to increase the amount of the active substance while facilitating production and processing.

According to some embodiments of this application, 0.8≤W2/W1≤1.2 is satisfied.

In this solution, the range of the width ratio of the avoidance region and the uncoated region is further limited to achieve a reasonable ratio range therebetween, thereby facilitating production and processing and increasing the amount of the active substance.

According to some embodiments of this application, the size of the uncoated region in the width direction of the current collector is L, and the size of the avoidance region in the width direction of the current collector is D, satisfying 0.1≤D/L≤1.

In this solution, the size of the uncoated region in the width direction of the current collector is the length L of the uncoated region, and the size of the avoidance region in the width direction of the current collector is the depth D of the avoidance region. A larger D/L allows for a lower difficulty in welding the first sub-tab and the second sub-tab, and a smaller D/L allows for a larger contact area between the tab and the uncoated region. A range of a ratio of the length of the uncoated region and the depth of the avoidance region is limited to increase the contact area between the tab and the uncoated region while allowing for an appropriate difficulty in welding the first sub-tab and the second sub-tab, that is, to improve the current flow capability of the tab.

According to some embodiments of this application, 0.2≤D/L≤0.8 is satisfied.

In this solution, the ratio of depth D of the avoidance region and the length L of the uncoated region is further limited to increase the contact area between the tab and the uncoated region while allowing for a low difficulty in connecting the tab and the uncoated region, thereby improving the current flow capability of the tab.

According to some embodiments of this application, the electrode plate further includes a first insulating layer and a second insulating layer. The first insulating layer and the second insulating layer respectively cover the uncoated region from two sides of the uncoated region in the thickness direction thereof. The first sub-tab is located between the first insulating layer and the uncoated region, and the second sub-tab is located between the second insulating layer and the uncoated region.

In this solution, the first insulating layer and the second insulating layer are provided to cover the first sub-tab and the second sub-tab, thereby reducing the risk of a short circuit in the battery.

According to some embodiments of this application, the first insulating layer and the second insulating layer are adhered to each other in the avoidance region.

In this solution, the first insulating layer and the second insulating layer are adhered to each other, so that the first sub-tab and the second sub-tab can be strengthened, reducing the risk of the tab falling off the uncoated region.

According to some embodiments of this application, the first sub-tab is connected to the uncoated region at one end, and surpasses the current collector, the first insulating layer, and the second insulating layer at the other end along the width direction of the current collector.

In this solution, the first sub-tab surpasses the current collector, the first insulating layer, and the second insulating layer along the width direction of the current collector, so as to be easily connected to an electrode lead-out portion in a battery cell, thereby allowing charge and discharge of the battery cell.

According to some embodiments of this application, the current collector is a composite current collector.

In this solution, a composite current collector may be used to improve the safety of the battery and reduce the risk of a short circuit in the battery caused by burrs puncturing the current collector. The composite current collector includes an insulating layer and conductive layers. The conductive layers are separately provided on two surfaces of the insulating layer in a thickness direction.

According to a second aspect, this application further provides a battery cell including an electrode assembly. The electrode assembly includes a positive electrode plate and a negative electrode plate. At least one of the positive electrode plate and the negative electrode plate is the electrode plate in any one of the embodiments according to the first aspect.

According to a third aspect, this application further provides a battery including a box and the battery cell according to the second aspect, where the battery cell is accommodated in the box.

According to a fourth aspect, this application further provides an electric device including the battery according to the third aspect, where the battery is configured to provide electrical energy.

The foregoing descriptions are merely an overview of the technical solutions of this application. For a better understanding of the technical means in this application such that they can be implemented according to the content of the specification, and to make the above and other objectives, features and advantages of this application more obvious and easier to understand, the following describes specific embodiments of this application.

### BRIEF DESCRIPTION OF DRAWINGS

To describe the technical solutions of the embodiments of this application more clearly, the following briefly describes the accompanying drawings required for describing the embodiments. It should be understood that the accompanying drawings below merely show some embodiments of this application and therefore should not be considered as limitations to the scope of this application. Persons of ordinary skill in the art may still derive other related drawings from these accompanying drawings without creative efforts.
FIG. 1 is a structural schematic diagram of a vehicle according to some embodiments of this application;
FIG. 2 is a structural schematic exploded view of a battery according to some embodiments of this application;
FIG. 3 to FIG. 5 are schematic diagrams of an electrode plate from different perspectives according to some embodiments of this application;
FIG. 6 is a schematic diagram of a current collector according to some embodiments of this application;
FIG. 7 is a schematic diagram of an electrode plate in the prior art;
FIG. 8 is a schematic diagram of a current collector according to some other embodiments of this application;
FIG. 9 is a schematic diagram of an electrode plate according to some embodiments of this application;
FIG. 10 is a schematic diagram of an electrode plate including a first insulating layer and a second insulating layer according to some embodiments of this application;
FIG. 11 is a side view of an electrode plate including a first insulating layer and a second insulating layer according to some embodiments of this application; and
FIG. 12 is a schematic diagram of an electrode plate including a first insulating layer and a second insulating layer according to some other embodiments of this application.

Reference signs: 10. electrode plate; 11. current collector; 11a. active substance layer; 110. coated region; 110a. first coated sub-region; 110b. second coated sub-region; 111. uncoated region; 12. tab; 120. first sub-tab; 121. second sub-tab; 122. first welded region; 123. second welded region; 13. avoidance region; 14. first insulating layer; 15. second insulating layer; x. length direction; y. width direction; z. thickness direction; 1000. vehicle; 100. battery; 200. controller; 300. motor; 30. box; 31. first portion; 32. second portion; and 101. battery cell.

### DESCRIPTION OF EMBODIMENTS

To make the objectives, technical solutions, and advantages of the embodiments of this application clearer, the following clearly and completely describes the technical solutions in the embodiments of this application with reference to the accompanying drawings in the embodiments of this application. It will be apparent that the described embodiments are some but not all of the embodiments of this application. All other embodiments obtained by persons of ordinary skill in the art based on the embodiments of this application without creative efforts shall fall within the protection scope of this application.

Unless otherwise defined, all technical and scientific terms used in this application shall have the same meanings as commonly understood by persons skilled in the art to which this application relates. The terms used in the specification of this application are intended to merely describe the specific embodiments rather than to limit this application. The terms "include", "comprise", and any variation thereof in the specification, claims and brief description of drawings of this application are intended to cover non-exclusive inclusions. In the specification, claims, or accompanying drawings of this application, the terms "first", "second", and the like are intended to distinguish between different objects rather than to indicate a particular sequence or relative importance.

Reference to "embodiment" in this application means that specific features, structures, or characteristics described with reference to the embodiments may be included in at least one embodiment of this application. The word "embodiment" appearing in various places in the specification does not necessarily refer to the same embodiment or an independent or alternative embodiment that is exclusive of other embodiments. It is explicitly or implicitly understood by persons skilled in the art that the embodiments described in this application may be combined with other embodiments.

In the description of this application, it should be noted that unless otherwise specified and defined explicitly, the terms "mounting", "connection", "join", and "attachment" should be understood in their general senses. For example, they may refer to a fixed connection, a detachable connection, or an integral connection, and may refer to a direct connection, an indirect connection via an intermediate medium, or an internal communication between two elements. Persons of ordinary skills in the art can understand specific meanings of these terms in this application as appropriate to specific situations.

The term "and/or" in this application is only an associative relationship for describing associated objects, indicating that three relationships may be present. For example, A and/or B may indicate three cases: presence of only A; presence of both A and B; and presence of only B. In addition, the character "/" in this application generally indicates an "or" relationship between the contextually associated objects.

In this application, "a plurality of" means more than two (inclusive). Similarly, "a plurality of groups" means more than two (inclusive) groups, and "a plurality of pieces" means more than two (inclusive) pieces.

The battery mentioned in this application is a single physical module that includes one or more battery cells for providing a higher voltage and capacity.

The battery cell includes a housing assembly, an electrode assembly, and an electrolyte. The electrode assembly and the electrolyte are disposed in the housing assembly. The electrode assembly includes a positive electrode plate, a negative electrode plate, and a separator. Working of the battery cell mainly relies on migration of metal ions between the positive electrode plate and the negative electrode plate. The positive electrode plate includes a positive electrode current collector, a positive electrode active substance layer, and a positive electrode plate. The negative electrode plate includes a negative electrode current collector, a negative electrode active substance layer, and a negative electrode plate. The current collector includes a coated region coated with an active substance layer and an uncoated region uncoated with the active substance layer, where the uncoated region is connected to a tab. A lithium-ion battery is used as an example, in which, the positive electrode current collector may be made of aluminum, and the positive electrode active substance layer may be made of lithium cobaltate, lithium iron phosphate, ternary lithium, lithium manganate, or the like. The negative electrode current collector may be made of copper, and the negative electrode active substance layer may be made of carbon, silicon, or the like. In a battery cell, a larger amount of the active substance allows for a higher energy density. The separator may be made of polypropylene (PP), polyethylene (PE), or the like. The tab of the electrode plate is connected to an electrode lead-out portion of the housing assembly, so as to implement input and output of electrical energy.

A battery life of an electric vehicle is associated with the energy density of a battery, and a higher energy density of the battery allows for a longer battery life. Therefore, how energy density of batteries is enhanced is an urgent technical problem to be solved.

The inventors have found that an uncoated region of an existing electrode plate is entirely exposed, to be specific, an entire side of a current collector in a width direction is the uncoated region, and one end of the uncoated region in a length direction of the current collector extends to the other end, facilitating tab welding. However, the uncoated region exposed has a portion that is not welded to the tab, and this portion is uncoated with an active substance layer, resulting in underutilization of this portion, and affecting the energy density of the battery.

In view of this, to increase the energy density of batteries, the inventors have designed an electrode plate through in-depth research, in which an uncoated region of a tab is not exposed, to be specific, in a width direction of a current collector, an uncoated region does not surpass a coated region.

With the design of the uncoated region and the coated region, the current collector is coated with a larger amount of active substance without affecting the connection between the tab and the uncoated region, so that the battery has a higher energy density.

The battery disclosed in the embodiments of this application may be used without limitation in electric devices such as vehicles, ships, or aircrafts. The battery disclosed in this application may be used to constitute a power supply system of such electric devices.

An embodiment of this application provides an electric device that uses a battery as a power source. The electric device may be, but is not limited to, a mobile phone, a tablet computer, a laptop computer, an electric toy, an electric tool, an electric bicycle, an electric motorcycle, an electric car, a ship, or a spacecraft. The electric toy may be a fixed or mobile electric toy, for example, a game console, an electric toy car, an electric toy ship, and an electric toy airplane. The spacecraft may include an airplane, a rocket, a space shuttle, a spaceship, and the like.

For ease of description, an example in which the electric device is a vehicle in an embodiment of this application is used for description in the following embodiments.

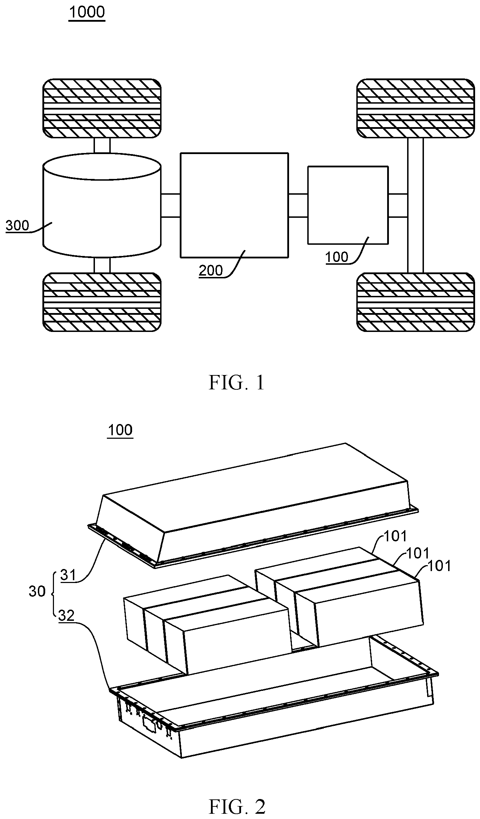

Refer to FIG. 1. FIG. 1 is a structural schematic diagram of a vehicle 1000 according to some embodiments of this application. The vehicle 1000 may be a fossil fuel vehicle, a natural-gas vehicle, or a new energy vehicle, where the new energy vehicle may be a battery electric vehicle, a hybrid electric vehicle, a range-extended vehicle, or the like. The vehicle 1000 is provided with a battery 100 inside, and the battery 100 may be disposed at the bottom, front, or rear of the vehicle 1000. The battery 100 may be configured to supply power to the vehicle 1000. For example, the battery 100 may be used as an operational power source for the vehicle 1000 for use in a circuit system of the vehicle 1000, for example, to satisfy power needs for start, navigation, and running of the vehicle 1000.

The vehicle 1000 may further include a controller 200 and a motor 300, where the controller 200 is configured to control the battery 100 to supply power to the motor 300, for example, to satisfy power needs for start, navigation, and driving of the vehicle 1000.

In some embodiments of this application, the battery 100 can not only be used as the operational power source for the vehicle 1000 but also a driving power source for the vehicle 1000, replacing or partially replacing fossil fuel or natural gas to provide driving traction for the vehicle 1000.

Refer to FIG. 2. FIG. 2 is a structural schematic exploded view of a battery according to some embodiments of this application. As shown in FIG. 2, the battery 100 may further include a box 30. A plurality of battery cells 101 are disposed in the box 30. The box 30 may employ various structures. In some embodiments, the box 30 may include a first portion 31 and a second portion 32. The first portion 31 and the second portion 32 fit together so that the first portion 31 and the second portion 32 jointly define an accommodating space for accommodating the battery cells 101. The second portion 32 may be a hollow structure with one end open, and the first portion 31 may be a plate structure, where the first portion 31 covers the open side of the second portion 32, so that the first portion 31 and the second portion 32 jointly define an accommodating space. Alternatively, the first portion 31 and the second portion 32 may both be hollow structures with one side open, where the open side of the first portion 31 is engaged with the open side of the second portion 32.

In the battery 100, the plurality of battery cells 101 may be connected in series, parallel, or series-parallel, where being connected in series-parallel means a combination of series and parallel connections of the plurality of battery cells 101. The battery 100 may further include other structures. For example, the battery 100 may further include a busbar configured to implement electrical connection between the plurality of battery cells.

Each battery cell 101 may be a secondary battery or a primary battery. The battery cell 101 may be a lithium-ion battery, a lithium-sulfur battery, a sodium-ion battery, or a magnesium-ion battery, without being limited thereto.

According to some embodiments of this application, the battery cell may include a housing assembly, an electrode assembly, and an electrolyte. The electrode assembly and the electrolyte are disposed in the housing assembly. The electrode assembly is formed by stacking and winding a separator and two electrode plates having opposite polarities. The two electrode plates having opposite polarities include a positive electrode plate and a negative electrode plate. The electrode plate includes a current collector and an active substance layer. An active substance is applied on a coated region of the current collector to form the active substance layer. An uncoated region of the current collector is connected to a tab. The current collector of the positive electrode plate may be made of aluminum, and the active substance layer of the positive electrode plate may be made of lithium cobaltate, lithium iron phosphate, ternary lithium, lithium manganate, or the like. The current collector of the negative electrode plate may be made of copper, and the active substance layer of the negative electrode plate may be made of carbon, silicon, or the like. The tab is connected to an electrode lead-out portion of the housing assembly, so as to implement input and output of electrical energy. The housing assembly may be of various shapes and sizes, for example, a rectangular shape, a cylindrical shape, and a hexagonal prism shape. Specifically, the shape of the housing assembly may be determined based on a specific shape and size of the electrode assembly. The housing assembly may be made of various materials, for example, copper, iron, aluminum, stainless steel, aluminum alloy, and plastic, which are not particularly limited in the embodiments of this application.

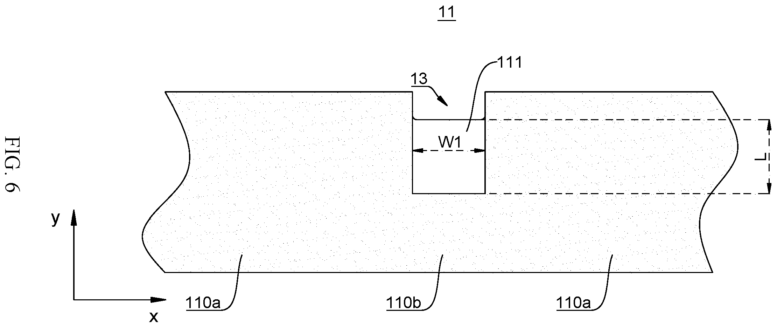

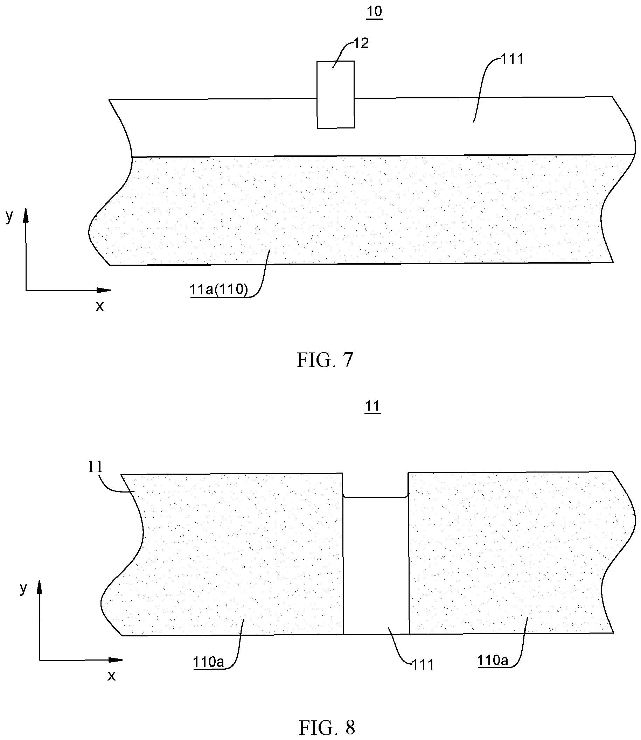

According to some embodiments of this application, referring to FIG. 3 to FIG. 7, FIG. 3 to FIG. 5 are schematic diagrams of an electrode plate 10 from different perspectives according to some embodiments of this application, FIG. 6 is a schematic diagram of a current collector 11 according to some embodiments of this application, and FIG. 7 is a schematic diagram of an electrode plate 10 in the prior art.

This application provides an electrode plate 10. The electrode plate 10 includes a current collector 11 and a tab 12. The current collector 11 includes a coated region 110 coated with an active substance layer 11a and an uncoated region 111 uncoated with the active substance layer 11a. In a width direction y of the current collector 11, the uncoated region 111 does not surpass the coated region 110. The tab 12 is connected to the uncoated region 111.

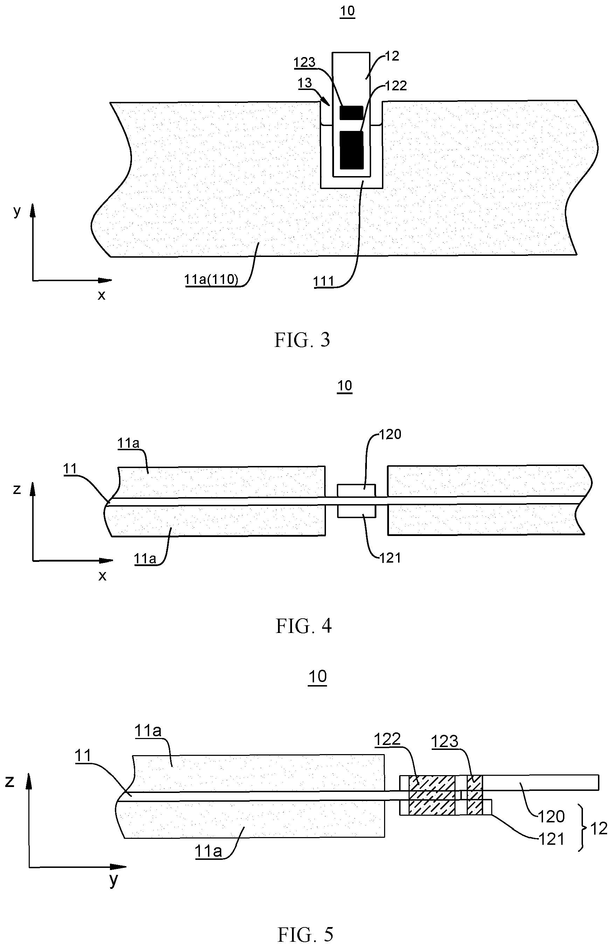

FIG. 3 is a schematic diagram of the electrode plate 10 observed in a thickness direction z of the current collector 11. FIG. 4 is a schematic diagram of the electrode plate 10 observed in the width direction y of the current collector 11 (moreover, the active substance layer 11a behind the tab 12 is hidden in FIG. 4), and the tab 12 is seen first from this perspective. FIG. 5 is a schematic diagram of the electrode plate 10 observed in a length direction x of the current collector 11.

The tab 12 is connected to the uncoated region 111 and protrudes from the current collector 11 along the width direction y of the current collector 11. In this way, in a battery cell, the tab 12 can protrude from a battery assembly so as to be connected to an electrode lead-out portion, thereby allowing output and input of electrical energy.

In the battery cell, a larger amount of the active substance allows for a higher energy density of the battery cell. With reference to FIG. 3 to FIG. 6, comparison is performed between them and FIG. 7. FIG. 7 shows an electrode plate 10 in the prior art. An uncoated region 111 of the electrode plate 10 in the prior art is exposed, to be specific, a coated region 110 and the uncoated region 111 of the existing electrode plate 10 are arranged in a width direction y of a current collector 11. On a side of the current collector 11 in the width direction y, the entire uncoated region 111 surpasses the coated region 110. The uncoated region 111 and the coated region 110 have a same size in a length direction x of the current collector 11. The tab 12 is welded to a portion of the uncoated region 111, and the remaining portions of the uncoated region 111 to which the tab 12 is not welded are both uncoated with the active substance layer 11a. As shown in FIG. 3 and FIG. 6, the uncoated region 111 of the electrode plate 10 in this embodiment is not exposed, and the uncoated region 111 does not surpass the coated region 110 in the width direction y of the current collector 11. Based on the comparison between FIG. 6 and FIG. 7, compared with the existing electrode plate 10, the electrode plate 10 in this embodiment makes proper use of the remaining portions of the uncoated region 111 to which no tab 12 is welded in the existing electrode plate 10.

In this solution, in the width direction y of the current collector 11, the uncoated region 111 does not surpass the coated region 110. Compared with the electrode plate of which the uncoated region 111 is exposed and surpasses the coated region 110, the electrode plate 10 in this solution has a smaller uncoated region 111 and a larger region that can be coated with an active substance, so that the current collector 11 can be coated with a larger amount of active substance, thereby increasing the energy density of the battery.

According to some embodiments of this application, referring to FIG. 6 and FIG. 8, FIG. 8 is a schematic diagram of a current collector 11 according to some other embodiments of this application. The coated region 110 includes a plurality of first coated sub-regions 110a; the plurality of first coated sub-regions 110a are spaced apart along a length direction x of the electrode plate 10; and the uncoated region 111 is located between two adjacent first coated sub-regions 110a.

The current collectors 11 shown in FIG. 6 and FIG. 8 both include the first coated sub-regions 110a. In the length direction x of the current collector 11, the plurality of first coated sub-regions 110a are spaced apart, and the uncoated region 111 is between every two adjacent first coated sub-regions 110a. Therefore, the number of the first coated sub-regions 110a is at least two. When the number of the first coated sub-regions 110a is two, the current collector 11 has only one uncoated region 111.

In this solution, the plurality of first coated sub-regions 110a are spaced apart along the length direction x of the electrode plate 10, and the uncoated region 111 uncoated with the active substance layer 11a is reserved between the two adjacent first coated sub-regions 110a, such that the first coated sub-regions 110a and the uncoated region 111 are both regularly distributed on the current collector 11, thereby reducing the difficulty in applying the active substance layer 11a and reducing the difficulty in connecting the tab 12 and the uncoated region 111.

According to some embodiments of this application, as shown in FIG. 6 or FIG. 8, the size of the first coated sub-region 110a in the width direction y of the current collector 11 is equal to width of the current collector 11.

The size of the first coated sub-region 110a in the width direction y of the current collector 11 being equal to the width of the current collector 11 means that in the width direction y of the current collector 11, the first coated sub-region 110a extends from one side to the other side of the current collector 11 in the width direction y. As compared with FIG. 7, it will be apparent that in the width direction y of the current collector 11, the existing coated region 110 takes up only a part of the current collector 11, and the size of the coated region 110 in the width direction y of the current collector 11 is less than the width of the current collector 11.

In this solution, the first coated sub-region 110a extends to two opposite edges of the current collector 11 in the width direction y. As compared with an electrode plate of which an uncoated region extends along the entire length direction of a current collector and the width of a coated region is less than the width of the current collector, the current collector 11 of the electrode plate in this solution can be coated with a larger amount of active substance, thereby increasing the energy density of the battery.

According to some embodiments of this application, as shown in FIG. 6, the coated region 110 further includes a second coated sub-region 110b; the two adjacent first coated sub-regions 110a are connected through the second coated sub-region 110b; and the second coated sub-region 110b and the uncoated region 111 are arranged in the width direction y of the current collector 11.

The second coated sub-region 110b is a portion, located between two first coated sub-regions 110a and having an active substance layer 11a, of the current collector 11. As compared with FIG. 8, the electrode plate 10 shown in FIG. 6 is provided with the second coated sub-region 110b and therefore has a larger amount of active substance.

In this solution, with the second coated sub-region 110b provided on a side of the uncoated region 111 in the width direction y of the current collector 11, an amount of the active substance on the current collector 11 is further increased without affecting the connection between the uncoated region 111 and the tab 12, thereby increasing the energy density of the battery.

According to some embodiments of this application, referring to FIG. 6, the size of the uncoated region 111 in the length direction x of the current collector 11 is W1, satisfying 5 mm≤W1≤50 mm.

The size W1 of the uncoated region 111 in the length direction x of the current collector 11 may be a distance between two coated regions 110 (the first coated sub-regions 110a) adjacent to the uncoated region 111 in the length direction x of the current collector 11. For example, W1 may be 5 mm, 6 mm, 7 mm, 8 mm, 9 mm, 10 mm, 11 mm, 12 mm, 13 mm, 14 mm, 15 mm, 16 mm, 17 mm, 18 mm, 19 mm, 20 mm, 21 mm, ..., 40 mm, 41 mm, 42 mm, 43 mm, 44 mm, 45 mm, 46 mm, 47 mm, 48 mm, 49mm, or 50 mm.

Generally, the uncoated region 111 and the tab 12 are electrically connected through welding. Therefore, a larger size of the uncoated region 111 in the length direction x of the current collector 11 allows for easier welding of the tab 12 to the uncoated region 111.

In this solution, the size of the uncoated region 111 in the length direction x of the current collector 11 is the width W1 of the uncoated region 111. A larger W1 allows for easier connection between the uncoated region 111 and the tab 12, and a smaller W1 allows for a larger amount of the active substance, resulting in a higher energy density of the battery. A value range of W1 is limited to balance the difficulty in connecting the uncoated region 111 and the tab 12 and the amount of the active substance of the electrode plate 10.

According to some embodiments of this application, 10 mm≤W1≤20 mm is satisfied.

The size W1 of the uncoated region 111 in the length direction x of the current collector 11 is further limited, so that the tab 12 can be easily welded to the uncoated region 111, and the electrode plate 10 can have a larger amount of active substance layer 11a. For example, W1 may be 10 mm, 11 mm, 12 mm, 13 mm, 14 mm, 15 mm, 16 mm, 17 mm, 18 mm, 19 mm, or 20 mm.

In this solution, W1 is further limited to allow for a lower difficulty in connecting the uncoated region 111 and the tab 12 and allow the electrode plate 10 to have a larger amount of active substance layer 11a, such that the battery has a higher energy density.

According to some embodiments of this application, referring to FIG. 6, the size of the uncoated region 111 in the width direction y of the current collector 11 is L, satisfying 10 mm≤L≤200 mm.

The size L of the uncoated region 111 in the width direction y of the current collector 11 may be a longitudinal depth of the uncoated region 111. A larger longitudinal depth of the uncoated region 111 allows the tab 12 to be further connected to a longitudinal deeper position of the uncoated region 111, thereby reducing the difficulty in welding of the tab 12 to the uncoated region 111 and enhancing the connection strength between the tab 12 and the uncoated region 111. In addition, a contact area between the tab 12 and the uncoated region 111 may be larger, improving the current flow capability of the tab 12. For example, L may be 10 mm, 20 mm, 30 mm, 40 mm, 50 mm, 60 mm, 70 mm, 80 mm, 90 mm, 100 mm, 110 mm, 120 mm, ..., 170 mm, 180 mm, 190 mm, or 200 mm.

In this solution, the size of the uncoated region 111 in the width direction y of the current collector 11 is the length L of the uncoated region 111. A larger L allows for easier connection between the uncoated region 111 and the tab 12 and a larger contact area therebetween, thus achieving a higher current flow capability. A smaller L allows for a larger amount of the active substance, resulting in a higher energy density of the battery. A value range of L is limited to balance the difficulty in connecting the uncoated region 111 and the tab 12, the current flow capability, and the amount of the active substance of the electrode plate 10.

According to some embodiments of this application, 20 mm≤L≤30 mm is satisfied.

The size L of the uncoated region 111 in the width direction y of the current collector 11 is further limited, so that the tab 12 can be easily welded to the uncoated region 111 and have good current flow capability, and the electrode plate 10 can have a larger amount of active substance layer 11a. For example, L may be 20 mm, 21 mm, 22 mm, 23 mm, 24 mm, 25 mm, 26 mm, 27 mm, 28 mm, 29 mm, or 30 mm.

In this solution, L is further limited to allow for a lower difficulty in connecting the uncoated region 111 and the tab 12 as well as a higher current flow capability (a higher current flow capability allows for better charge and discharge performance), and allow the electrode plate 10 to have a larger amount of active substance layer 11a, such that the battery has a higher energy density.

According to some embodiments of this application, referring to FIG. 3 to FIG. 5, the tab 12 includes a first sub-tab 120 and a second sub-tab 121. The first sub-tab 120 and the second sub-tab 121 are respectively connected to two sides of the uncoated region 111 in the thickness direction z thereof, and the first sub-tab 120 is connected to the second sub-tab 121.

Two opposite side surfaces of the uncoated region 111 in the thickness direction z are respectively defined as a first side surface and a second side surface. The first sub-tab 120 is electrically connected to the first side surface, and the second sub-tab 121 is electrically connected to the second side surface. The first sub-tab 120 and the second sub-tab 121 are electrically connected to each other.

In this solution, the first sub-tab 120 and the second sub-tab 121 can gather current in two sides of the uncoated region 111 in the thickness direction z, so as to effectively improve the current flow capability of the tab 12.

According to some embodiments of this application, referring to FIG. 3, the first sub-tab 120 and the uncoated region 111 are welded to form a first welded region 122; and the first sub-tab 120 and the second sub-tab 121 are welded to form a second welded region 123.

The first sub-tab 120 and the uncoated region 111 are electrically connected through welding. The first welded region 122 refers to a welded region between the first sub-tab 120 and the uncoated region 111. The first sub-tab 120 and the second sub-tab 121 are electrically connected through welding. The second welded region 123 refers to a welded region between the first sub-tab 120 and the second sub-tab 121.

In this solution, the first sub-tab 120 and the second sub-tab 121 are both electrically connected to the uncoated region 111 through welding, making the tab 12 have good current flow capability.

According to some embodiments of this application, an area of the first welded region 122 is S1, and an area of the second welded region 123 is S2, satisfying 0.1≤S1/S2≤1.

In some embodiments, S1/S2 may be 0.1, 0.2, 0.3, 0.4, 0.5, 0.6, 0.7, 0.8, 0.9, or 1.

In this solution, a range of a ratio of the first welded region 122 and the second welded region 123 is limited, so as to make the tab 12 have good current flow capability on the premise of meeting the processing requirements.

According to some embodiments of this application, 0.2≤S1/S2≤0.8 is satisfied.

In some embodiments, S1/S2 may be 0.2, 0.3, 0.4, 0.5, 0.6, 0.7, or 0.8.

In this solution, the range of the ratio of the first welded region 122 and the second welded region 123 is further limited, making the tab 12 have high current flow capability.

According to some embodiments of this application, reference is made to FIG. 3 and FIG. 6. The electrode plate 10 further includes an avoidance region 13 configured to avoid the second welded region 123; and the avoidance region 13 and the uncoated region 111 are arranged in the width direction y of the current collector 11.

The avoidance region 13 is a portion for avoiding the second welded region 123 and can be considered as a gap located in a side of the uncoated region 111 along the width of the current collector 11.

In this solution, the provision of the avoidance region facilitates mutual welding between the first sub-tab 120 and the second sub-tab 121 and can reduce the influence of the welding between the first sub-tab 120 and the second sub-tab 121 on the thickness of the electrode plate 10.

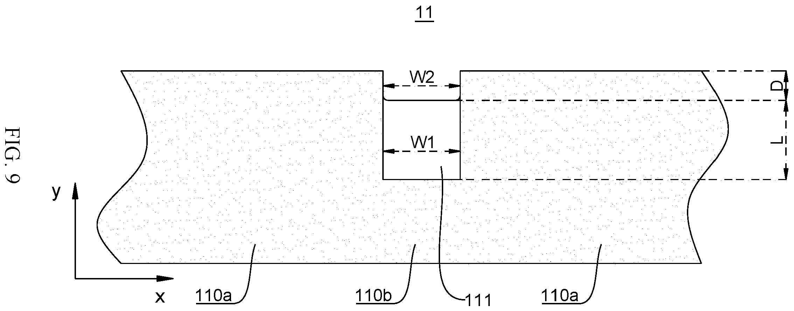

According to some embodiments of this application, referring to FIG. 6 and FIG. 9, FIG. 9 is a schematic diagram of an electrode plate 10. W2 is marked in FIG. 9.

The size of the uncoated region 111 in the length direction x of the current collector 11 is W1, and the size of the avoidance region13 in the length direction x of the current collector 11 is W2, satisfying 0.6≤W2/W1≤1.5.

The size W1 of the uncoated region 111 in the length direction x of the current collector 11 may be a distance, across the uncoated region 111, between two coated regions 110 (the first coated sub-regions 110a) adjacent to the uncoated region 111 in the length direction x of the current collector 11. The size W2 of the avoidance region 13 in the length direction x of the current collector 11 may be a distance, across the avoidance region 13, between two coated regions 110 (the first coated sub-regions 110a) adjacent to the avoidance region 13 in the length direction x of the current collector 11. In some embodiments, W2/W1 may be 0.6, 0.7, 0.8, 0.9, 1.0, 1.1, 1.2, 1.3, 1.4, or 1.5.

In this solution, the size of the avoidance region 13 in the length direction x of the current collector 11 is the width W2 of the avoidance region 13. A larger W2/W1 allows for a larger width of the avoidance region 13, thus facilitating connection between the tab 12 and the uncoated region 111. A smaller W2/W1 allows for a smaller width of the avoidance region 13, so that a larger amount of active substance layer 11a can be applied. A range of a width ratio of the avoidance region 13 and the uncoated region 111 is limited, so as to increase the amount of the active substance while facilitating production and processing.

According to some embodiments of this application, 0.8≤W2/W1≤1.2 is satisfied.

In some embodiments, W2/W1 may be 0.8, 0.9, 1.0, 1.1, or 1.2.

In this solution, the range of the width ratio of the avoidance region 13 and the uncoated region 111 is further limited to achieve a reasonable ratio range therebetween, thereby facilitating production and processing and increasing the amount of the active substance.

According to some embodiments of this application, referring to FIG. 9, the size of the uncoated region 111 in the width direction y of the current collector 11 is L, and the size of the avoidance region 13 in the width direction y of the current collector 11 is D, satisfying 0.1≤D/L≤1.

In some embodiments, D/L may be 0.1, 0.2, 0.4, 0.8, or 1.

The size L of the uncoated region 111 in the width direction y of the current collector 11 may be a longitudinal depth of the uncoated region 111. A larger longitudinal depth of the uncoated region 111 allows the tab 12 to be further connected to a longitudinal deeper position of the uncoated region 111, thereby reducing the difficulty in welding of the tab 12 to the uncoated region 111 and enhancing the connection strength between the tab 12 and the uncoated region 111. In addition, a contact area between the tab 12 and the uncoated region 111 may be larger, improving the current flow capability of the tab 12.

The size of the avoidance region 13 in the width direction y of the current collector 11 is D and may be a longitudinal depth of the avoidance region 13. A larger longitudinal depth of the avoidance region 13 allows the second welded region 123 to be accommodated more easily, making the second welded region 123 have a larger area and allowing for a lower difficulty in welding between the first sub-tab 120 and the second sub-tab 121.

In this solution, the size of the uncoated region 111 in the width direction y of the current collector 11 is the length L of the uncoated region 111, and the size of the avoidance region 13 in the width direction y of the current collector 11 is the depth D of the avoidance region 13. A larger D/L allows for a lower difficulty in welding the first sub-tab 120 and the second sub-tab 121, and a smaller D/L allows for a larger contact area between the tab 12 and the uncoated region 111. A range of a ratio of the length L of the uncoated region 111 and the depth D of the avoidance region 13 is limited to increase the contact area between the tab 12 and the uncoated region 111 on the premise of allowing for an appropriate difficulty in welding the first sub-tab 120 and the second sub-tab 121, that is, to improve the current flow capability of the tab 12.

According to some embodiments of this application, 0.2≤D/L≤0.8 is satisfied.

In some embodiments, D/L may be 0.2, 0.3, 0.4, 0.5, 0.6, 0.7, or 0.8.

In this solution, the ratio of the depth D of the avoidance region 13 and the length L of the uncoated region 111 is further limited to increase the contact area between the tab 12 and the uncoated region 111 to lower the difficulty of connecting the tab 12 and the uncoated region 111, thereby improving the current flow capability of the tab 12.

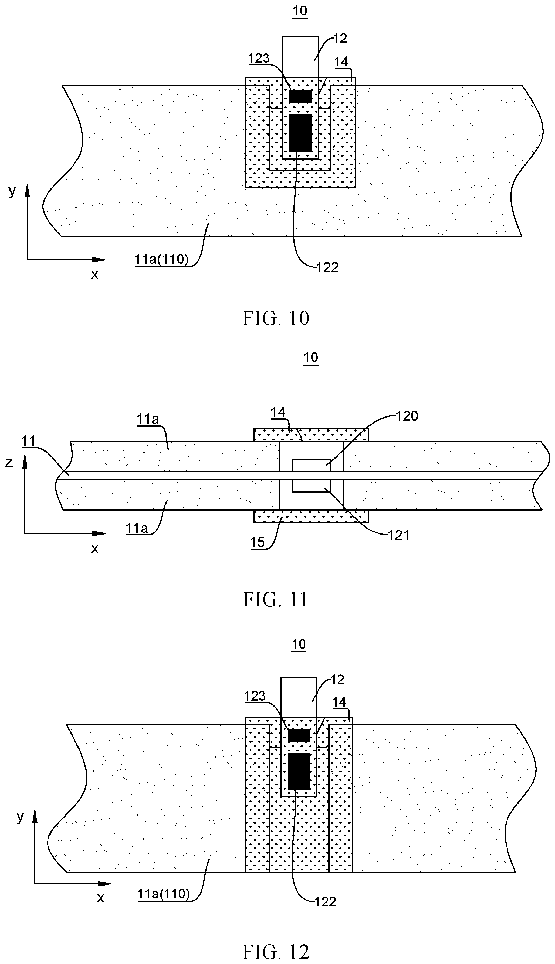

According to some embodiments of this application, referring to FIG. 10 and FIG. 11, FIG. 10 is a schematic diagram of an electrode plate 10 including a first insulating layer 14 and a second insulating layer 15 according to some embodiments of this application, and FIG. 11 is a side view of an electrode plate 10 including a first insulating layer 14 and a second insulating layer 15 according to some embodiments of this application. The electrode plate 10 further includes a first insulating layer 14 and a second insulating layer 15. The first insulating layer 14 and the second insulating layer 15 respectively cover the uncoated region 111 from two sides of the uncoated region 111 in the thickness direction z thereof. The first sub-tab 120 is located between the first insulating layer 14 and the uncoated region 111; and the second sub-tab 121 is located between the second insulating layer 15 and the uncoated region 111.

The first insulating layer 14 and the second insulating layer 15 may be made of a material having insulating characteristics and therefore have an insulating function. The first insulating layer 14 and the second insulating layer 15 are configured to cover the uncoated region 111 from the two sides of the uncoated region 111 in the thickness direction z, so as to insulate the uncoated region 111 from the tab 12 connected to the uncoated region 111. In some embodiments, the first insulating layer 14 and the second insulating layer 15 cover the avoidance region 13 and the tab 12 located in the avoidance region 13.

In some embodiments, referring to FIG. 12, FIG. 12 is a schematic diagram of an electrode plate 10 including a first insulating layer 14 and a second insulating layer 15 according to some other embodiments of this application. The electrode plate 10 in FIG. 12 is provided with no second coated sub-region 110b. Therefore, the uncoated region 111 extends from one side to the other side of the current collector 11. To reduce the risk of a short circuit in the battery, the first insulating layer 14 and the second insulating layer 15 may cover the entire uncoated region 111.

In this solution, the first insulating layer 14 and the second insulating layer 15 are provided to cover the first sub-tab 120 and the second sub-tab 121, thereby reducing the risk of a short circuit in the battery.

According to some embodiments of this application, the first insulating layer 14 and the second insulating layer 15 are adhered to each other in the avoidance region 13.

The first insulating layer 14 and the second insulating layer 15 may be insulating paper boards. Two side surfaces of the current collector 11 in the thickness direction z are defined as a first side surface and a second side surface. The first insulating layer 14 may be adhered to the coated region 110, uncoated region 111, first sub-tab 120, and second insulating layer 15 on the first side surface. The second insulating layer 15 may be adhered to the coated region 110, uncoated region 111, second sub-tab 121, and the first insulating layer 14 on the second side surface.

In this solution, the first insulating layer 14 and the second insulating layer 15 are adhered to each other, so that the first sub-tab 120 and the second sub-tab 121 can be strengthened, reducing the risk of the tab 12 falling off the uncoated region 111.

According to some embodiments of this application, referring to FIG. 10, the first sub-tab 120 is connected to the uncoated region 111 at one end, and the other end surpasses the current collector 11 at the other end, the first insulating layer 14, and the second insulating layer 15 along the width direction y of the current collector 11.

The size of the first sub-tab 120 in the width direction y of the current collector 11 is greater than the length of the second sub-tab 121. Therefore, material costs of the tab 12 can be reduced. The first sub-tab 120 is electrically connected to the uncoated region 111 at one end, and surpasses the current collector 11, the first insulating layer 14, and the second insulating layer 15 at the other end, so as to be connected to an electrode lead-out portion, thereby allowing input or output of electrical energy of the battery cell.

In this solution, the first sub-tab 120 surpasses the current collector 11, the first insulating layer 14, and the second insulating layer 15 along the width direction y of the current collector 11, so as to be easily connected to the electrode lead-out portion in a battery cell, thereby allowing charge and discharge of the battery cell.

According to some embodiments of this application, the current collector 11 is a composite current collector.

The composite current collector is an existing current collector 11 with high safety. The composite current collector includes an insulating layer and conductive layers provided on two sides of the insulating layer in a thickness direction z. The active substance layers 11a of the electrode plate 10 are applied on the two conductive layers, and the tab 12 is electrically connected to the two conductive layers. In some embodiments, the tab 12 includes a first sub-tab 120 and a second sub-tab 121. The first sub-tab 120 is connected to one conductive layer, and the second sub-tab 121 is connected to the other conductive layer. The first sub-tab 120 and the second sub-tab 121 are electrically connected to each other.

In this solution, a composite current collector may be used to improve the safety of the battery and reduce the risk of a short circuit in the battery caused by burrs puncturing the current collector 11. The composite current collector includes an insulating layer and conductive layers. The conductive layers are provided on two surfaces of the insulating layer in the thickness direction z.

According to some embodiments of this application, this application further provides a battery cell including an electrode assembly. The electrode assembly includes a positive electrode plate and a negative electrode plate. At least one of the positive electrode plate and the negative electrode plate is the electrode plate 10 provided in any one of the foregoing embodiments.

According to some embodiments of this application, this application further provides a battery including a box and the battery cell provided in the foregoing embodiments, where the battery cell is accommodated in the box.

According to some embodiments of this application, this application further provides an electric device including the battery provided in the foregoing embodiments, where the battery is configured to provide electrical energy.

According to some embodiments of this application, this application further provides an electrode plate 10 referring to FIG. 3 to FIG. 6 and FIG. 9 to FIG. 11. The electrode plate 10 includes a current collector 11 and a tab 12. The current collector 11 is a composite current collector.

In the width direction y of the current collector 11, the uncoated region 111 is not exposed, meaning that the uncoated region 111 does not surpass the coated region 110. Referring to FIG. 6, FIG. 6 is a section of the current collector 11. It can be seen from FIG. 6 that in the width direction y of the current collector 11, the uncoated region 111 sinks in the coated region 110. Compared with an electrode plate 10 in the prior art shown in FIG. 7, the electrode plate 10 provided in these embodiments has a coated region 110 with a larger area and thus has a larger amount of active substance.

The current collector 11 is a composite current collector. Therefore, to improve the current flow capability of the tab 12, the tab 12 includes a first sub-tab 120 and a second sub-tab 121. The first sub-tab 120 and the second sub-tab 121 are respectively welded to two sides of the uncoated region 111 in the thickness direction z thereof, and the first sub-tab 120 and the second sub-tab 121 are welded to each other. To reduce the influence of the welded region between the first sub-tab 120 and the second sub-tab 121 on the thickness of the electrode plate 10, the electrode plate 10 further includes an avoidance region 13. The avoidance region 13 and the uncoated region 111 are arranged in the width direction y of the current collector 11. The welded region between the first sub-tab 120 and the second sub-tab 121 is located in the avoidance region 13.

To improve the safety of the electrode plate 10, reduce the risk of a short circuit in the battery cell, and enhance connection strength of the tab 12, the electrode plate 10 further includes a first insulating layer 14 and a second insulating layer 15. The first insulating layer 14 and the second insulating layer 15 may both be insulating adhesive paper. The first insulating layer 14 and the second insulating layer 15 respectively cover the uncoated region 111, the avoidance region 13, and the tab 12 from the two sides of the uncoated region 111 in the thickness direction z thereof, and are adhered to each other.

The foregoing descriptions are merely preferred embodiments of this application, but are not intended to limit this application. Persons skilled in the art understand that this application may have various modifications and variations. Any modification, equivalent replacement, and improvement made without departing from the spirit and principle of this application shall fall within the protection scope of this application.

## Claims

1. An electrode plate, comprising:
a current collector, comprising a coated region coated with an active substance layer and an uncoated region uncoated with the active substance layer, wherein in a width direction of the current collector, the uncoated region does not surpass the coated region; and
a tab connected to the uncoated region.

2. The electrode plate according to claim 1, wherein
the coated region comprises a plurality of first coated sub-regions; the plurality of first coated sub-regions are spaced apart along a length direction of the electrode plate; and the uncoated region is located between the two adjacent first coated sub-regions.

3. The electrode plate according to claim 2, wherein
a size of the first coated sub-region in the width direction of the current collector is equal to width of the current collector.

4. The electrode plate according to claim 2 or 3, wherein
the coated region further comprises a second coated sub-region; the two adjacent first coated sub-regions are connected through the second coated sub-region; and the second coated sub-region and the uncoated region are arranged in the width direction of the current collector.

5. The electrode plate according to any one of claims 1 to 4, wherein
a size of the uncoated region in a length direction of the current collector is W1, satisfying 5 mm≤W1≤50 mm.

6. The electrode plate according to claim 5, wherein
10 mm≤W1≤20 mm is satisfied.

7. The electrode plate according to any one of claims 1 to 6, wherein
a size of the uncoated region in the width direction of the current collector is L, satisfying 10 mm≤L≤200 mm.

8. The electrode plate according to claim 7, wherein
20 mm≤L≤30 mm is satisfied.

9. The electrode plate according to any one of claims 1 to 8, wherein
the tab comprises a first sub-tab and a second sub-tab, wherein the first sub-tab and the second sub-tab are respectively connected to two sides of the uncoated region in a thickness direction thereof, and the first sub-tab is connected to the second sub-tab.

10. The electrode plate according to claim 9, wherein
the first sub-tab and the uncoated region are welded to form a first welded region; and the first sub-tab and the second sub-tab are welded to form a second welded region.

11. The electrode plate according to claim 10, wherein
an area of the first welded region is S1, and an area of the second welded region is S2, satisfying 0.1≤S1/S2≤1.

12. The electrode plate according to claim 11, wherein
0.2≤S1/S2≤0.8 is satisfied.

13. The electrode plate according to any one of claims 10 to 12, wherein
the electrode plate further comprises an avoidance region configured to avoid the second welded region; and the avoidance region and the uncoated region are arranged in the width direction of the current collector.

14. The electrode plate according to claim 13, wherein
the size of the uncoated region in a length direction of the current collector is W1, and the size of the avoidance region in the length direction of the current collector is W2, satisfying 0.6≤W2/W1≤1.5.

15. The electrode plate according to claim 14, wherein
0.8≤W2/W1≤1.2 is satisfied.

16. The electrode plate according to any one of claims 13 to 15, wherein
the size of the uncoated region in the width direction of the current collector is L, and the size of the avoidance region in the width direction of the current collector is D, satisfying 0.1≤D/L≤1.

17. The electrode plate according to claim 16, wherein
0.2≤D/L≤0.8 is satisfied.

18. The electrode plate according to any one of claims 13 to 17, wherein
the electrode plate further comprises a first insulating layer and a second insulating layer; the first insulating layer and the second insulating layer respectively cover the uncoated region from two sides of the uncoated region in the thickness direction thereof; the first sub-tab is located between the first insulating layer and the uncoated region; and the second sub-tab is located between the second insulating layer and the uncoated region.

19. The electrode plate according to claim 18, wherein
the first insulating layer and the second insulating layer are adhered to each other in the avoidance region.

20. The electrode plate according to claim 18 or 19, wherein
the first sub-tab is connected to the uncoated region at one end, and surpasses the current collector, the first insulating layer, and the second insulating layer at the other end along the width direction of the current collector.

21. The electrode plate according to any one of claims 1 to 20, wherein
the current collector is a composite current collector.

22. A battery cell, comprising an electrode assembly, wherein the electrode assembly comprises a positive electrode plate and a negative electrode plate, and at least one of the positive electrode plate and the negative electrode plate is the electrode plate according to any one of claims 1 to 21.

23. A battery, comprising a box and the battery cell according to claim 22, wherein the battery cell is accommodated in the box.

24. An electric device, comprising the battery according to claim 23, wherein the battery is configured to provide electrical energy.
